# EUROPEAN PATENT SPECIFICATION

(11) **EP 1 557 575 B1**
(45) Date of publication and mention of the grant of the patent: **03.01.2007**
(21) Application number: 04001601.6
(22) Date of filing: 26.01.2004
(51) Int. Cl.: F16B 25/00, F16B 33/02, F16B 5/02, B21H 3/02

(54) **Screw with a plurality of screwing angles and thread rolling die for forming the same**
Schraube mit einer Vielzahl von Schraubwinkeln und Walzbacken zu ihrer Herstellung
Vis avec une pluralité de l'angle du vissage et matrice de filetage par roulage pour sa fabrication

(43) Date of publication of application: 27.07.2005
(73) Proprietor: Ho, Jen-Tong, Wanli Township, Taipei County 207 (TW)
(72) Inventor: Ho, Jen-Tong, Wanli Township, Taipei County 207 (TW)
(74) Representative: Viering, Jentschura & Partner

(56) References cited:
- AU-B- 494 077
- CH-A- 689 214
- US-A- 3 246 556
- US-A- 3 682 507
- US-A- 6 030 162

## Description

### Field of the invention

The present invention relates to a screw, and particular to a screw according to the preamble of claim 1 as well as to a mold device for forming a screw with a plurality of helix angles.

### Background of the invention

A screw of the initially mentioned type is disclosed in CH 689 214 A, December 15, 1998. The shank comprises at least a first, a second and a third axially displaced threaded section. The first and third threaded section being identically in configuration and the intermediate second threaded section having a different thread pitch or angle than the first and second section. However in this prior art, from the drawing thereof, it is apparent that the third threaded section is not connected to the immediate threaded section. A smooth section is formed between the section and third thread sections.

In another prior art, U. S. patent No. US-A-6 030 162, a fastener is disclosed, which comprises a root portion, the root portion having a leading end, a trailing end and an elongate axis extending therebetween; and a single continuous thread formed on the root portion and extending between the leading end and the trailing end of the root portion. The thread has an outside diameter which, moving from the leading end toward the trailing end, increases over several revolutions, then decreases, then increases again. The pitch of the thread is measured between corresponding points on consecutive threads near the leading end and is larger than the pitch of the threads near the trailing end. The fastener only has two threaded sections.

In another prior art, U. S. Patent No. US-A-3 682 507, the prior art discloses a screw type fastener, of the type adapted for use with panels comprising insulating material bounded by sheet material on one side. The fastener includes three sections of thread convolutions, the first section is located directly beneath the head of the fastener and extend for a short axial distance. The second section is located near the drilling point of the fastener and is adapted to fasten to the thick sheet of purling material comprising part of the panel. The immediate or third section is utilized to prevent the fastener from falling freely through the insulating material and this prevent possible breaking of the drilling tip or cocking of the fastener out of the perpendicular plane.

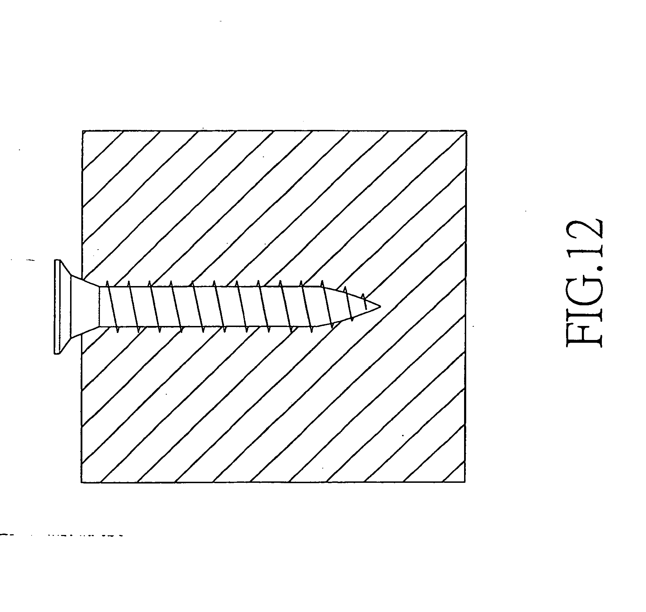

In Fig. 12 the operation about screwing a prior art screw having a thread with unique orientation is illustrated. It is illustrated that the screw is screwed into a work piece with a constant orientation. It results that the screw is tightly clamped by the work piece so that the friction force is larger and thus the screwing work is difficult. When the screw is longer, the difficulty in locking the screw is enhanced.

### Summary of the invention

Accordingly, the primary object of the present invention is to provide a screw which requires a smaller twisting force for screwing into a work piece.

This is achieved by a screw with a plurality of helix angles and a mold device for forming the screw having the features in claim 1 and 8, respectively. The screw comprises a first section having a first thread with a first helix angle, at least one third section having a second thread with a second helix angle; and a fifth section having a fifth thread and the first helix angle. The second helix angle is not equal to the first helix angle. Moreover, screw further comprises a second section connected between the first section and the third section; the second section having a fourth thread with a fourth helix angle; a fourth section connected between the third section and the fifth section; and the fourth section having a third thread with a third helix angle.

Further embodiments of the invention are described in the dependent claims 2-7 and 9-14.

The various objects and advantages of the present invention will be more readily understood from the following detailed description when read in conjunction with the appended drawing.

### Brief Description of the Drawings

Fig. 1 is a plan schematic view of the screw of the present invention.
Fig. 2 is a schematic view showing that the first helix angle is smaller than the second helix angle according to the present invention.
Fig. 3 is a schematic view in which the first thread is cut away, and which shows that the first helix angle is larger than the second helix angle according to the present invention.
Fig. 4 is a cross section view showing that a screw is screwed into a work piece according to the present invention.
Fig. 5 is a schematic view showing the curves in the twisting test according to the present invention.
Fig. 6 is a schematic perspective view of the mold device of the present invention.
Fig. 7 is a plan schematic view of the mold device of the present invention.
Fig. 8 is a schematic perspective view of a two mold case of the present invention.
Fig. 9 is a schematic view showing that the orientation of the first sloped recess is larger than that of the second sloped recess according to the present invention.
Fig. 10 is a schematic view showing that the orientation of the first sloped recess is smaller than that of the second sloped recess according to the present invention.
Fig. I is a schematic view showing the curves about the twisting test of the prior art.
Fig. 12 is a schematic cross view about the operation of the prior art screw.

### Detailed Description of the Invention

In order that those skilled in the art can further understand the present invention, a description will be described in the following in details. However, these descriptions and the appended drawings are only used to cause those skilled in the art to understand the objects, features, and characteristics of the present invention.

The present invention will be described here.

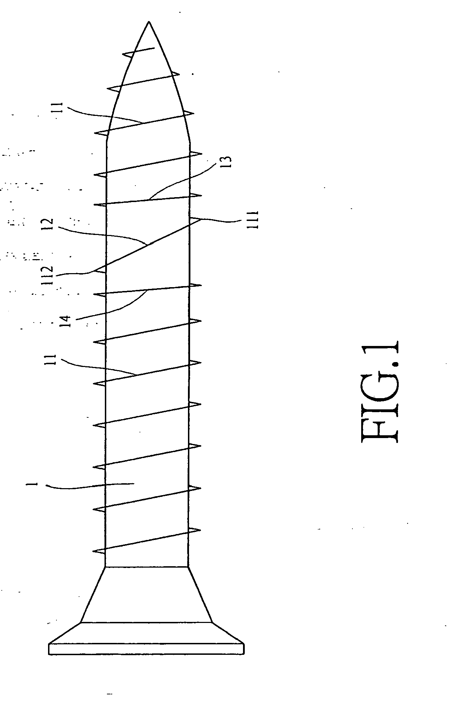

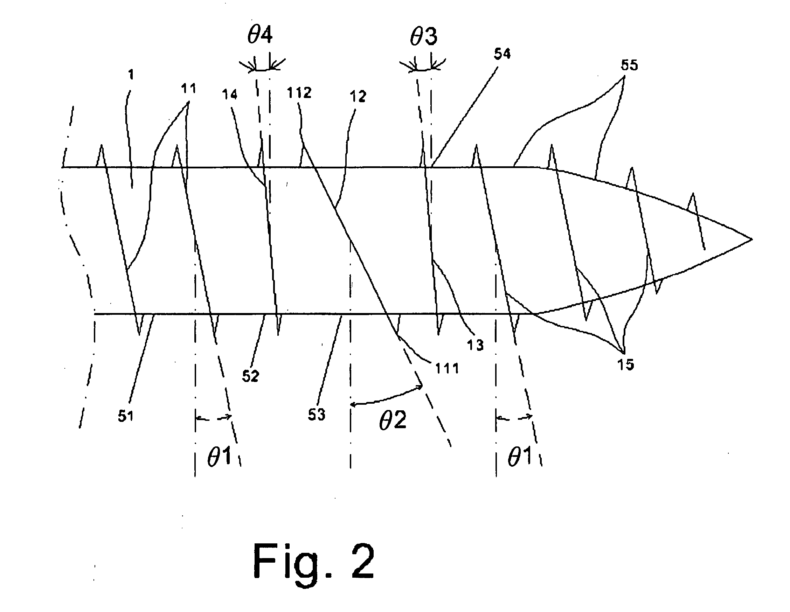

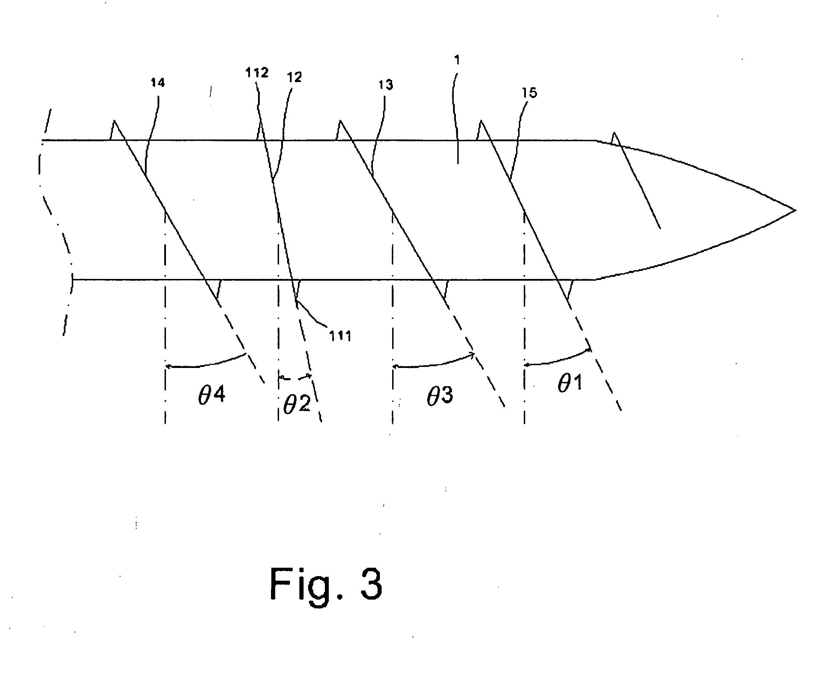

With reference to Figs. 1 to 3, the screw 1 of the present invention includes a first section 51 having a first thread 11 with a first helix angle θ1, and at least one third section 53 having a second thread 12 with a second helix-angle θ2 and a fifth section 55 having a fifth thread 15 with the first helix angle θ1 which is identical to that in the first section 51. Indeed, the fifth thread 15 is identical to the first thread 11, namely, it has the same thread pitch and helix angle. The second helix angle θ2 is not equal to the first helix angle θ1. Preferably, the second helix angle θ2 is larger than the first helix angle θ1 (see Fig. 2), or the second helix angle θ2 is smaller than the first helix angle θ1 (see Fig. 3).

A second section 52 is connected between the first section 51 and the third section 53. The second section 52 has a fourth thread 14 with a fourth helix angle θ4. A fourth section 54 is connected between the third section 53 and the fifth section 55. The fourth section 54 has a third thread 13 with a third helix angle θ3. The third helix angle θ3 is smaller than (referring to Fig. 2) or larger than (referring to Fig. 3) the first helix angle θ1, and / or the fourth helix angle θ4 is smaller than (referring to Fig. 2) or larger than (referring to Fig. 3) the first helix angle θ1. The indication 111 in Fig. 2 illustrates the area between the sections 53 and 55, and the indication 112 in Fig. 2 illustrates the area between the sections 51 and 53.

According to the embodiment of Fig. 2, the thread pitch of the second thread 12 is 150 to 170 % of the thread pitch of the first thread 11, and the thread pitch of the third thread 13 and / or the fourth thread 14 is 67 to 75 % of that of the first thread 11.

According to the embodiment of Fig. 3, the thread pitch of the second thread 12 is 30 to 50 % of the first thread 11; and the thread pitch of the third thread 13 and / or fourth thread 14 is 125 to 135 % of that of the first thread 11.

The third helix angle θ3 is equal or unequal to the fourth helix angle θ4.

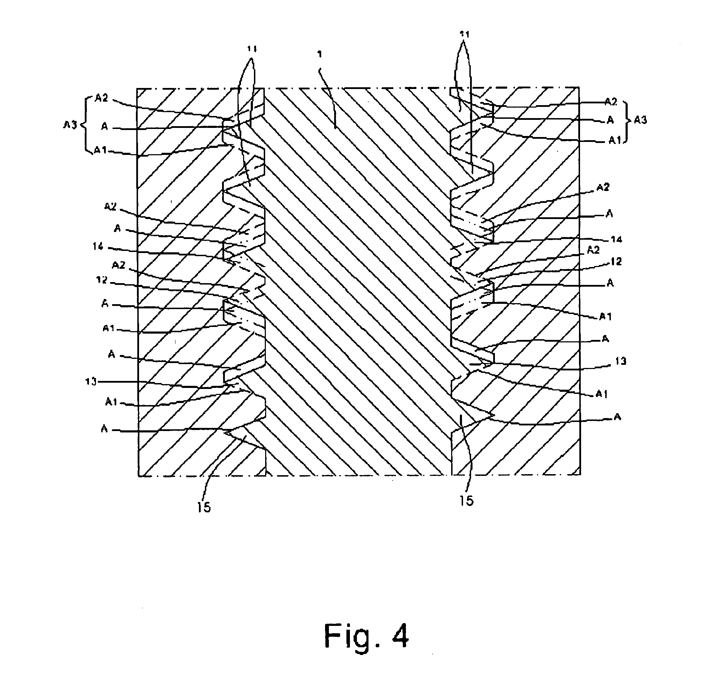

Referring to Figs. 1-4, the operation of the present invention will be described here. In screwing the screw 1, the fifth section 55 firstly moves into the work piece, and the fifth thread 15 identical to the first thread 11 serves to cut the work piece, where indication A in Fig. 4 is a cut screw channel. When the fourth section 54 having the third thread 13 enters into the work piece, the channel A will be enlarged at one side so as to be form an enlarged portion Al due to the third helix angle θ3 of the third thread 13 different from the first helix angle θ1 as the dashed line shown in Fig. 4. When the screw I enters into the work piece continuously, due to the second helix angle θ2 of the second thread 12, the channel A is further enlarged at another side so as to form another enlarged portion A2. Next, the fourth thread 14 enters into the work piece. The channel is further enlarged to a proper width as the indication A2 shown in Fig. 4. Thereby, when the first section 51 of the screw with the first thread 11 further enters into the work piece, since the channel is enlarged, the screw can enter into the work piece with less friction. This is especially beneficial for long screws.

The test result of the present invention in comparison with the prior art screw will be described herein.

The test object: CHIB wood screw.

Specification: Major diameter / depth of the thread / thread pitch : 4.0 /5,0 cm / 1.8

Number of test objects: 10, the average value is calculated.

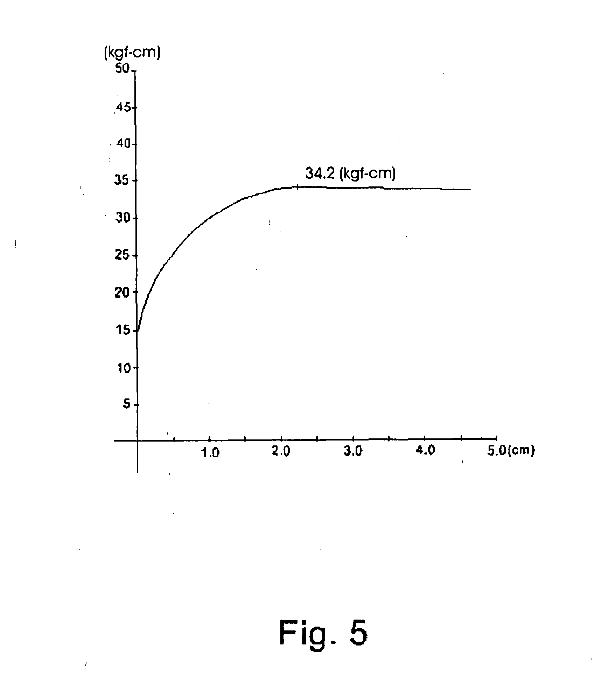

Referring to Figs. 5, the test result is illustrated. It is illustrated the larger twisting force of the screw of the present invention is at a depth of the thread of about 2.0 to 2.5 cm with an average twisting force of 34.2 kgf-cm. Then, after the portion of the screw after that point, the twisting force is normal. This means that when a long screw is used, less power is necessary. The required twisting force will not increase due to the increment of length of the screw.

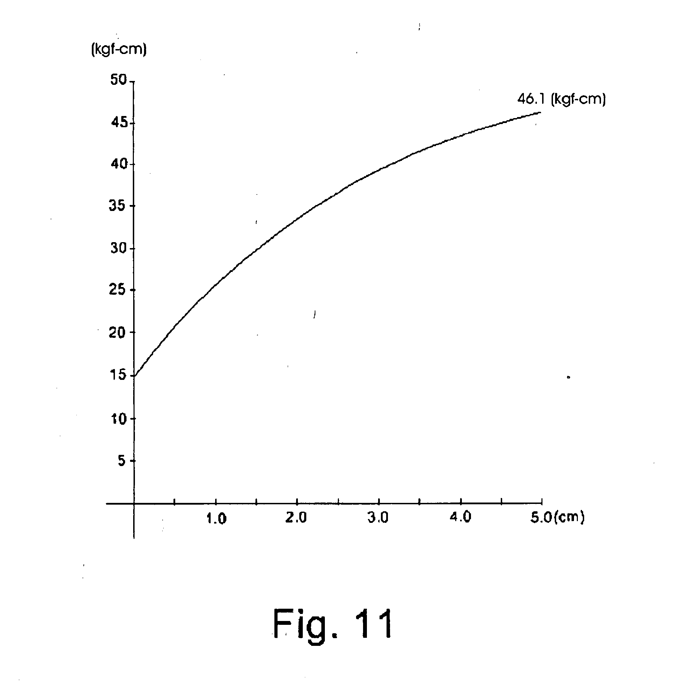

Referring to Figs. 11, it is illustrated that the average value for the prior art screw is 46.1 kgf-cm. The longer the screw, the larger the twisting force. Thus it is difficult to lock a long screw.

Thereby, it is known from above test result, as comparing with a screw of 5 cm, the present invention can save a force of 25 % than the prior art. The longer the screw, the larger the force to be saved.

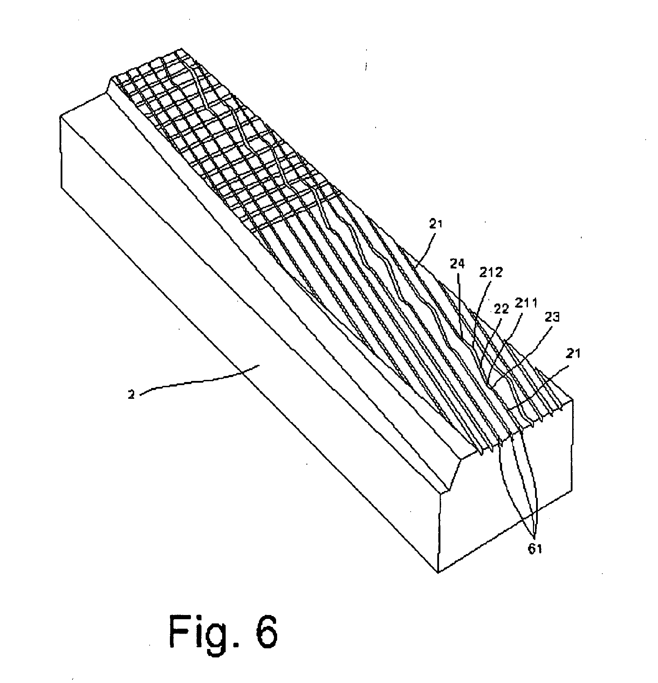

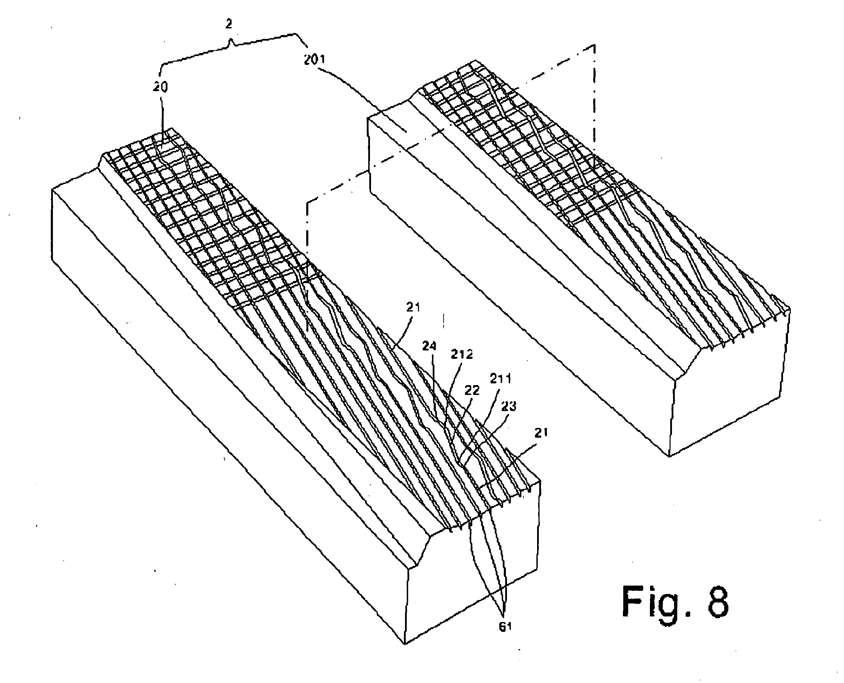

With reference to Figs. 6 to 10, the mold for forming the screw 1 of the present invention will be described herein. A mold 2 for forming a screw with a plurality of screw angle comprises a first mold 20 which has a plurality of recesses 61 (see Fig. 8) approximately arranged in parallel. Each recess 61 includes two first sloped recesses 21 for forming the first thread I I with a first helix angle θ1 and a second sloped recess 22 for forming the second thread 12 with a second helix angle θ2. The second sloped recess 22 is connected between the two first sloped recesses 21. The orientation of the second sloped recess 22 is different from that of the first sloped recesses 21.

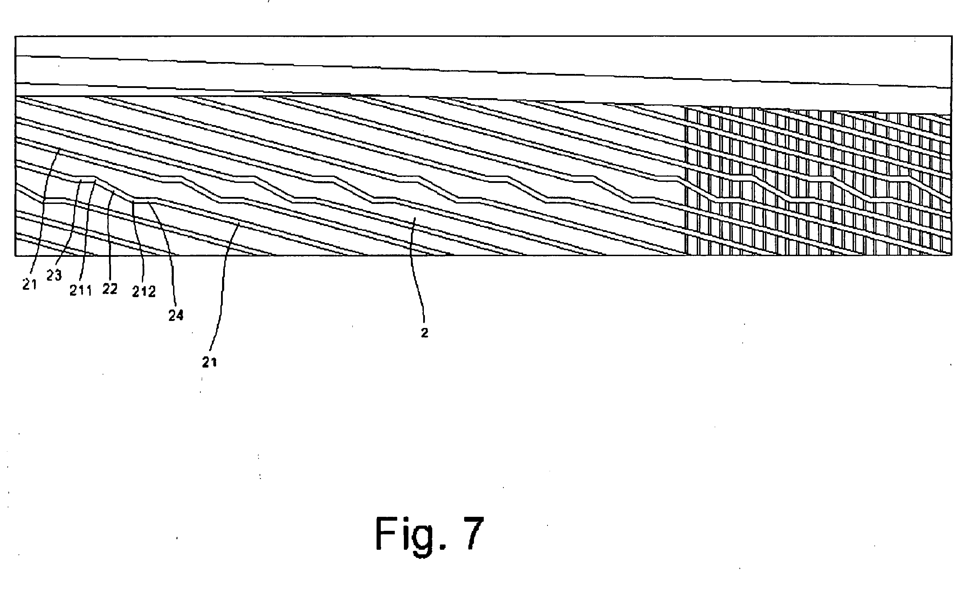

With reference to Figs. 7, 9, and 10, the first mold 20 further includes a third sloped recess 23 connected between one of the first sloped recess 21 and the second sloped recess 22 (the indications 211 and 212 illustrate the connections of the third sloped recess 23 with other recesses) so as to be an input end and a fourth sloped trench 24 connected between the other one of the first sloped recess 21 and the second sloped recess 22 so as to be as an output end.

The orientations of the third sloped recess 23 and the fourth sloped trench 24 may be identical or different. Preferably, when the orientation of the first sloped recess 21 is set as a horizontal direction, the absolute value of the slope of the orientation of the third sloped recess 23 is identical to or different from the slope of the orientation of the fourth sloped trench 24.

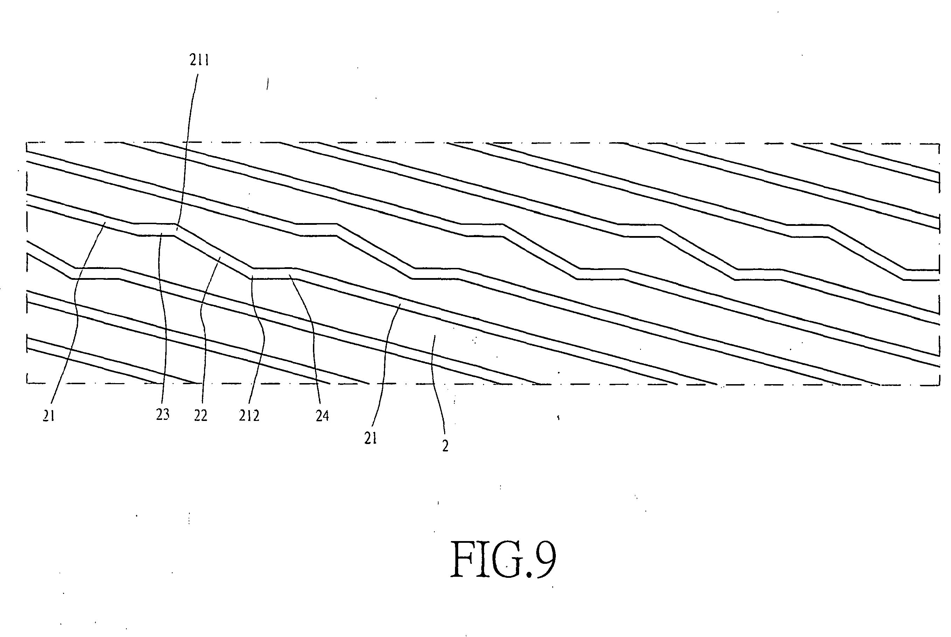

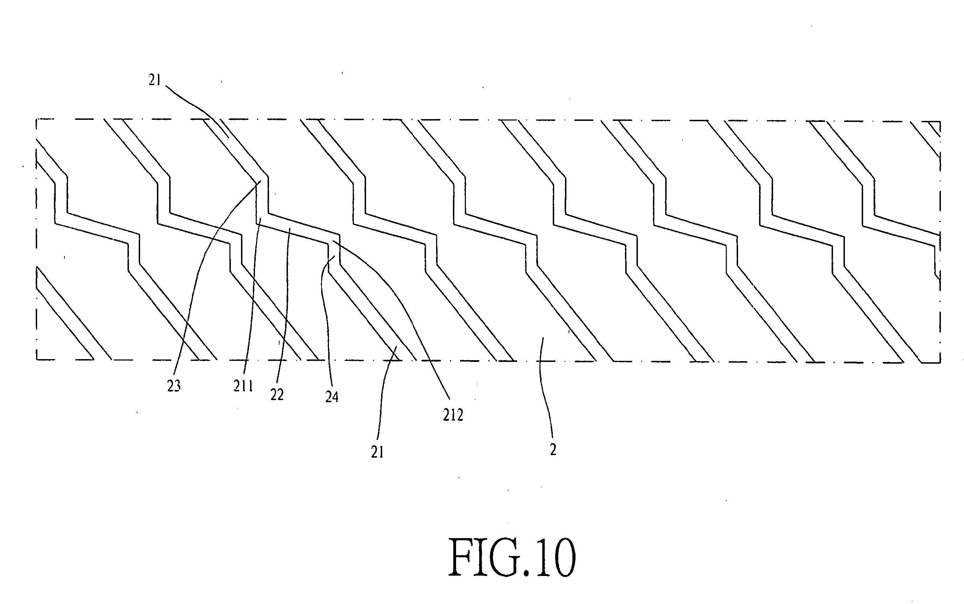

In the present invention, with respect to a horizontal direction in the Figures 9 and 10, the slope of the orientation of the second sloped recess 22 is larger than that of the first sloped recess 21, as shown in Fig. 9, or the slope of the orientation of the second sloped recess 22 is smaller than that of the first sloped recess 21, as shown in Fig. 10.

Moreover, the mold 2 further comprises a second mold 201. The second mold is symmetrical to the first mold, as shown in Fig. 8.

The present invention is thus described, it will be obvious that the same may be varied in many ways.

## Claims

1. A screw with a plurality of helix angles comprising:
a first section (51) having a first thread (11) with a first helix angle (θ1);
at least one third section (53) having a second thread (12) with a second helix angle (θ2);
and a fifth section (55) having a fifth thread (15) with the first helix angle (θ1); and the fifth thread (15) having the same thread pitch as the first thread (11);
wherein the second helix angle (θ2) is not equal to the first helix angle (θ1),
**characterized in that** a second section (52) is connected between the first section (51) and the third section (53); the second section (52) has a fourth thread (14) with a fourth helix angle (θ4); a fourth section (54) is connected between the third section (53) and the fifth section (55); and the fourth section (54) has a third thread (13) with a third helix angle (θ3).

2. The screw with a plurality of helix angles as claimed in claim 1, wherein the third helix angle (θ3) is smaller than or larger than the first helix angle (θ1).

3. The screw with a plurality of helix angles as claimed in claim 1 or 2, wherein the fourth helix angle (θ4) is smaller than or larger than the first helix angle (θ1)

4. The screw with a plurality of helix angles as claimed in claim 1, wherein the thread pitch of the second thread (12) is 150 to 170 % of the thread pitch of the first thread (11), and the thread pitch of the third thread (13) and / or the fourth thread (14) is 67 to 75 % of the thread pitch of the first thread (11).

5. The screw with a plurality of helix angles as claimed in claim 1, wherein the thread pitch of the second thread (12) is 30 to 50 % of the first thread (11) and the thread pitch of the third thread (13) and / or fourth thread (14) is 125 to 135 % of that of the first thread (11).

6. The screw with a plurality of helix angles as claimed in any one of claims 1-5, wherein the third helix angle (θ3) is equal to the fourth helix angle (θ4).

7. The screw with a plurality of helix angles as claimed in any one of claims 1-5, wherein the third helix angle (θ3) is unequal to the fourth helix angle (θ4).

8. A mold device for forming a screw according to claims 1-7 with a plurality of helix angles comprising:
a first mold having a plurality of recesses which are approximately arranged in parallel, each recess (61) includes two first sloped recesses (21) for forming a first thread (11) and a fifth thread (15) with respectively a first helix angle (θ1), the fifth thread (15) having the same thread pitch as the first thread (11), a second sloped recess (22) for forming a second thread (12) with a second helix angle (θ2), the second helix angle (θ2) being not equal to the first helix angle (θ1), a third sloped recess (23) connected between that of the first sloped recesses (21) which forms the first thread (11) and the second sloped recess (22) for forming a fourth thread (14) with a fourth helix angle (θ4), and a fourth sloped trench (24) connected between the other one of the first sloped recesses (21) and the second sloped recess (22) for forming a third thread (13) with a third helix angle (θ3).

9. The mold device as claimed in claim 8, further comprising:
a second mold (201) line-symmetrical to the first mold (20), that is, when a virtual line is placed between the first mold (20) and second mold (201), the first and second molds (20, 201) are symmetrical with respect to the virtual line.

10. The mold device as claimed in claim 9, wherein when the orientation of the first sloped recess (21) is set as a horizontal direction, the absolute value of the slope of the third sloped recess (23) is identical to the absolute value of the slope of the fourth sloped trench (24).

11. The mold device as claimed in claim 9, wherein when the orientation of the first sloped recess (21) is set as a horizontal direction, the absolute value of the slope of the third sloped recess (23) is different from the absolute value of the slope of the fourth sloped trench (24).

12. The mold device as claimed in any one of claims 8-11, wherein the slope of the orientation of the second sloped recess (22) is larger than that of the first sloped recess (21).

13. The mold device as claimed in any one of claims 8-11, wherein the slope of the orientation of the second sloped recess (22) is smaller than that of the first sloped recess (21).

## Patentansprüche

1. Schraube mit einer Mehrzahl von Steigungswinkeln, aufweisend:
einen ersten Abschnitt (51), der ein erstes Gewinde (11) mit einem ersten Steigungswinkel (θ1) aufweist,
wenigstens einen dritten Abschnitt (53), der ein zweites Gewinde (12) mit einem zweiten Steigungswinkel (θ2) aufweist,
und einen fünften Abschnitt (55), der ein fünftes Gewinde (15) mit dem ersten Steigungswinkel (θ1) aufweist, wobei das fünfte Gewinde (15) die gleiche Gewindesteigung wie das erste Gewinde (11) aufweist, und
wobei der zweite Steigungswinkel (θ2) ungleich dem ersten Steigungswinkel (θ1) ist,
**dadurch gekennzeichnet, dass** ein zweiter Abschnitt (52) zwischen den ersten Abschnitt (51) und den dritten Abschnitt (53) gefügt ist, der zweite Abschnitt (52) ein viertes Gewinde (14) mit einem vierten Steigungswinkel (θ4) aufweist, ein vierter Abschnitt (54) zwischen den dritten Abschnitt (53) und den fünften Abschnitt (55) gefügt ist, und der vierte Abschnitt (54) ein drittes Gewinde (13) mit einem dritten Steigungswinkel (θ3) aufweist.

2. Schraube mit einer Mehrzahl von Steigungswinkeln wie in Anspruch 1 beansprucht, wobei der dritte Steigungswinkel (θ3) kleiner als oder größer als der erste Steigungswinkel (θ1) ist.

3. Schraube mit einer Mehrzahl von Steigungswinkeln wie in Anspruch 1 oder 2 beansprucht, wobei der vierte Steigungswinkel (θ4) kleiner als oder größer als der erste Steigungswinkel (θ1) ist.

4. Schraube mit einer Mehrzahl von Steigungswinkeln wie in Anspruch 1 beansprucht, wobei die Gewindesteigung des zweiten Gewindes (12) 150 bis 170 % der Gewindesteigung des ersten Gewindes (11) beträgt, und wobei die Gewindesteigung des dritten Gewindes (13) und/oder des vierten Gewindes (14) 67 bis 75 % der Gewindesteigung des ersten Gewindes (11) beträgt.

5. Schraube mit einer Mehrzahl von Steigungswinkeln wie in Anspruch 1 beansprucht, wobei die Gewindesteigung des zweiten Gewindes (12) 30 bis 50 % des ersten Gewindes (11) beträgt, und wobei die Gewindesteigung des dritten Gewindes (13) und/oder des vierten Gewindes (14) 125 bis 135 % von der des ersten Gewindes (11) beträgt.

6. Schraube mit einer Mehrzahl von Steigungswinkeln wie in einem der Ansprüche 1-5 beansprucht, wobei der dritte Steigungswinkel (θ3) gleich dem vierten Steigungswinkel (θ4) ist.

7. Schraube mit einer Mehrzahl von Steigungswinkeln wie in einem der Ansprüche 1-5 beansprucht, wobei der dritte Steigungswinkel (θ3) ungleich dem vierten Steigungswinkel (θ4) ist.

8. Formvorrichtung zum Formen einer Schraube gemäß den Ansprüchen 1-7 mit einer Mehrzahl von Steigungswinkeln, aufweisend:
eine erste Form mit einer Mehrzahl von Ausnehmungen, welche annähernd parallel angeordnet sind, wobei jede Ausnehmung (61) zwei erste geneigte Ausnehmungen (21) zum Formen eines ersten Gewindes (11) und eines fünften Gewindes (15) mit jeweils einem ersten Steigungswinkel (θ1), wobei das fünfte Gewinde (15) die gleiche Gewindesteigung wie das erste Gewinde (11) aufweist, eine zweite geneigte Ausnehmung (22) zum Formen eines zweiten Gewindes (12) mit einem zweiten Steigungswinkel (θ2), wobei der zweite Steigungswinkel (θ2) ungleich dem ersten Steigungswinkel (θ1) ist, eine dritte geneigte Ausnehmung (23), die zwischen diejenige der ersten geneigten Ausnehmungen (21), welche das erste Gewinde (11) formt, und die zweite geneigte Ausnehmung (22) gefügt ist, zum Formen eines vierten Gewindes (14) mit einem vierten Steigungswinkel (θ4), und eine vierte geneigte Rille (24) aufweist, die zwischen die andere der ersten geneigten Ausnehmungen (21) und die zweite geneigte Ausnehmung (22) gefügt ist, zum Formen eines dritten Gewindes (13) mit einem dritten Steigungswinkel (θ3).

9. Formvorrichtung wie in Anspruch 8 beansprucht, ferner aufweisend:
eine zweite Form (201), die liniensymmetrisch zu der ersten Form (20) ist, d.h., wenn eine virtuelle Linie zwischen der ersten Form (20) und der zweiten Form (201) angeordnet wird, sind die erste und die zweite Form (20, 201) symmetrisch in Bezug auf die virtuelle Linie.

10. Formvorrichtung wie in Anspruch 9 beansprucht, wobei der Absolutwert der Neigung der dritten geneigten Ausnehmung (23) identisch mit dem Absolutwert der Neigung der vierten geneigten Rille (24) ist, wenn die Ausrichtung der ersten geneigten Ausnehmung (21) als eine Horizontalrichtung festgelegt ist.

11. Formvorrichtung wie in Anspruch 9 beansprucht, wobei der Absolutwert der Neigung der dritten geneigten Ausnehmung (23) sich von dem Absolutwert der Neigung der vierten geneigten Rille (24) unterscheidet, wenn die Ausrichtung der ersten geneigten Ausnehmung (21) als eine Horizontalrichtung festgelegt ist.

12. Formvorrichtung wie in einem der Ansprüche 8-11 beansprucht, wobei die Neigung der Ausrichtung der zweiten geneigten Ausnehmung (22) größer als die der ersten geneigten Ausnehmung (21) ist.

13. Formvorrichtung wie in einem der Ansprüche 8-11 beansprucht, wobei die Neigung der Ausrichtung der zweiten geneigten Ausnehmung (22) kleiner als die der ersten geneigten Ausnehmung (21) ist.

## Revendications

1. Vis présentant une pluralité d'angles hélicoïdaux comprenant :
une première partie (51) comportant un premier filetage (11) présentant un premier angle hélicoïdal (θ1) ;
au moins une troisième partie (53) comportant un deuxième filetage (12) présentant un deuxième angle hélicoïdal (θ2);
et une cinquième partie (55) comportant un cinquième filetage (15) présentant le premier angle hélicoïdal (θ1); et le cinquième filetage (15) ayant le même pas de filetage que celui du premier filetage (11) ;
dans laquelle le deuxième angle hélicoïdal (θ2) n'est pas égal au premier angle hélicoïdal (θ1),
**caractérisé en ce qu'**une deuxième partie (52) est reliée entre la première partie (51) et la troisième partie (53) ; la deuxième partie (52) comporte un quatrième filetage (14) présentant un quatrième angle hélicoïdal (θ4); une quatrième partie (54) est reliée entre la troisième partie (53) et la cinquième partie (55) ; et la quatrième partie (54) comporte un troisième filetage (13) présentant un troisième angle hélicoïdal (θ3).

2. Vis présentant une pluralité d'angles hélicoïdaux selon la revendication 1, dans laquelle le troisième angle hélicoïdal (θ3) est inférieur ou supérieur au premier angle hélicoïdal (θ1).

3. Vis présentant une pluralité d'angles hélicoïdaux selon la revendication 1 ou 2, dans laquelle le quatrième angle hélicoïdal (θ4) est inférieur ou supérieur au premier angle hélicoïdal (θ1).

4. Vis présentant une pluralité d'angles hélicoïdaux selon la revendication 1, dans laquelle le pas de filetage du deuxième filetage (12) est de 150 à 170 % du pas de filetage du premier filetage (11), et le pas de filetage du troisième filetage (13) et/ou du quatrième filetage (14) est de 67 à 75 % du pas de filetage du premier filetage (11).

5. Vis présentant une pluralité d'angles hélicoïdaux selon la revendication 1, dans laquelle le pas de filetage du deuxième filetage (12) est de 30 à 50 % du pas du premier filetage (11) et le pas de filetage du troisième filetage (13) et/ou du quatrième filetage (14) est de 125 à 135 % du pas du premier filetage (11).

6. Vis présentant une pluralité d'angles hélicoïdaux selon l'une quelconque des revendications 1 à 5, dans laquelle le troisième angle hélicoïdal (θ3) est égal au quatrième angle hélicoïdal (θ4).

7. Vis présentant une pluralité d'angles hélicoïdaux selon l'une quelconque des revendications 1 à 5, dans laquelle le troisième angle hélicoïdal (θ3) n'est pas égal au quatrième angle hélicoïdal (θ4).

8. Dispositif de moulage pour fabriquer une vis selon l'une quelconque des revendications 1 à 7 présentant une pluralité d'angles hélicoïdaux comprenant :
un premier moule comportant une pluralité d'évidements qui sont agencés approximativement en parallèle, chaque évidement (61) comprend deux premiers évidements inclinés (21) pour former un premier filetage (11) et un cinquième filetage (15) présentant respectivement un premier angle hélicoïdal (θ1), le cinquième filetage (15) ayant le même pas de filetage que celui du premier filetage (11), un deuxième évidement incliné (22) pour former un deuxième filetage (12) présentant un deuxième angle hélicoïdal (θ2), le deuxième angle hélicoïdal (θ2) n'étant pas égal au premier angle hélicoïdal (θ1), un troisième évidement incliné (23) relié entre celui des premiers évidements inclinés (21) qui forme le premier filetage (11) et le deuxième évidement incliné (22) pour former un quatrième filetage (14) présentant un quatrième angle hélicoïdal (θ4), et une quatrième tranchée inclinée (24) reliée entre l'autre des premiers évidements inclinés (21) et le deuxième évidement (22) pour former un troisième filetage (13) présentant un troisième angle hélicoïdal (θ3).

9. Dispositif de moulage selon la revendication 8, comprenant, en outre :
un deuxième moule (201) symétrique par rapport à une ligne au premier moule (20), c'est-à-dire que, lorsqu'une ligne virtuelle est placée le premier moule (20) et le deuxième moule (201), les premier et deuxième moules (20, 201) sont symétriques par rapport à la ligne virtuelle.

10. Dispositif de moulage selon la revendication 9, dans lequel, lorsque l'orientation du premier évidement incliné (21) est définie comme étant une direction horizontale, la valeur absolue de la pente du troisième évidement incliné (23) est identique à la valeur absolue de la pente de la quatrième tranchée inclinée (24).

11. Dispositif de moulage selon la revendication 9, dans lequel, lorsque l'orientation du premier évidement incliné (21) est définie comme étant une direction horizontale, la valeur absolue de la pente du troisième évidement incliné (23) est différente de la valeur absolue de la pente de la quatrième tranchée inclinée (24).

12. Dispositif de moulage selon l'une quelconque des revendications 8 à 11, dans lequel la pente de l'orientation du deuxième évidement incliné (22) est supérieure à celle du premier évidement incliné (21).

13. Dispositif de moulage selon l'une quelconque des revendications 8 à 11, dans lequel la pente de l'orientation du deuxième évidement incliné (22) est inférieure à celle du premier évidement incliné (21).
